# EUROPEAN PATENT SPECIFICATION

(11) **EP 3 652 507 B1**
(45) Date of publication and mention of the grant of the patent: **07.06.2023**
(21) Application number: 17739587.8
(22) Date of filing: 14.07.2017
(51) Int. Cl.: G01F 22/02, F17C 13/02

(54) **ELECTRONIC GAUGE**
ELEKTRONISCHES MESSGERÄT
JAUGE ÉLECTRONIQUE

(43) Date of publication of application: 20.05.2020
(60) Divisional application: 23161695.4
(73) Proprietor: GCE Holding AB, 200 21 Malmö (SE)
(72) Inventor: PEMBERTON, Gareth, Worcester, Worcestershire WR5 3HQ (GB); PHILLIPS, Chris, 200 21 Malmö (SE); YATES, Lee, 200 21 Malmö (SE); TURNER, William, 200 21 Malmö (SE); ZMEK, Karel, 200 21 Malmö (SE); STEHNO, Ladislav, 200 21 Malmö (SE); NADVORNIK, Martin, 200 21 Malmö (SE); TASSELL, Andy, 200 21 Malmö (SE)
(74) Representative: AWA Sweden AB
(86) International application number: PCT/EP2017/067886
(87) International publication number: WO 2019/011446

(56) References cited:
- WO-A1-2015/063502
- WO-A2-2012/164240
- US-A1- 2016 097 666

## Description

### Technical field

The invention relates to an electronic gauge for use with a compressed gas cylinder and a method of calculating time remaining until substantially all gas in a compressed gas cylinder has been depleted. The invention also relates to a method of monitoring that a residual pressure valve of a gas cylinder is operational.

### Background art

Portable gas cylinders with integrated regulating cylinder valves are designed to enable patients with respiratory disorders, such as chronic obstructive pulmonary disease (COPD), to better manage their oxygen therapy within and outside their homes. COPD alone afflicts hundreds of million people worldwide on a yearly basis. Supplemental oxygen therapy is also prescribed for other ailments that weaken the respiratory system, such as heart disease and AIDS, as well as for asthma and emphysema.

Portable gas cylinders with integrated regulating cylinder valves are commercially available for providing ambulatory respiratory patients with COPD and other respiratory ailments with gaseous oxygen. A portable gas cylinder with integrated regulating cylinder valve holds high pressure oxygen which is reduced through the regulator to deliver a selectable flow rate. The portable gas cylinder with integrated regulating cylinder valve is small and light-weight in order to allow the ambulatory respiratory patient to readily use and transport the cylinder inside and outside the home. As a result, the respiratory patient can lead a more active lifestyle, which in turn can improve the overall health of the patient.

US 2016/097666 A1 discloses a device for monitoring the mass of a fluid remaining in a tank as the fluid periodically or continuously leaves the tank includes a housing comprising an inlet adapted to be attached to an outlet of the tank and to receive fluid from the tank. It comprises a pressure sensor and/or a temperature sensor in communication with at least one processor. A flow meter measures a plurality of flow rate measurements of the fluid as it leaves the tank. At least one processor, which is connected to the pressure sensor and/or the temperature sensor and to a display interface, is configured to determine a mass of the fluid that has left the tank during at least one measurement period, determine a mass of the fluid remaining in the tank based at least partially on an initial mass of the fluid in the tank and the determined mass of the fluid that has left the tank, and generate, based on the mass of the fluid remaining, an indication.

WO 2015/063502 A1 discloses a compressed gas cylinder which is suitable for use in delivering medical gas therapy to ambulatory patients. The compressed gas cylinder has a hollow main body in which therapeutic gas is stored under pressure; a cylinder head; a gas outlet; and a display. The device further discloses a central processing unit (CPU), a temperature sensor, a pressure sensor and an amplifier. The CPU is in communication with the display, the temperature sensor, and the amplifier that is connected to the pressure sensor.

The display provides estimates of the time remaining before full depletion of the gas within the cylinder. Estimates of the time remaining are based upon estimates of the amount of gas remaining in the gas cylinder.

WO 2012/164240 A2 discloses a flow apparatus having a flow control valve having a housing, an aperture, an aperture obturator and an actuator for moving said obturator between a first closed position and multiple open positions, characterised by a valve position monitor for monitoring the position of the valve and comprising a plurality of discrete sensors associated with a plurality of open positions of said valve for monitoring the presence or absence of one or more members movable with said valve. The arrangement may be used to monitor the valve position and such monitoring may be of use in the prediction of the amount of fluid remaining within a cylinder to which it has been attached.

A major problem with portable gas cylinders is not knowing the precise content of gas in order to estimate the time remaining for use with patient. At present, the gas cylinders are provided with either a mechanical pressure gauge or an electronic gauge in order to determine the remaining time of usage.

The method remains to have inaccuracies as the temperature of the gas is not accounted for, nor the variability in flow delivered or the typical usage pattern for the cylinder. Therefore, the time remaining displayed on current electronic gauges for medical oxygen gas cylinders are known to be inaccurate.

Another problem with currently available electronic gauges is their cost. The price of the electronic gauge in their current format is much higher than the price of a gas cylinder valve.

Another problem with currently available electronic gauges is that they cannot be fitted to current gas cylinders in the field.

### Summary of the invention

It is an objective of the present invention to mitigate, alleviate or eliminate one or more of the above-identified deficiencies in the art and disadvantages singly or in any combination and solve at least the above mentioned problems.

According to a first aspect of the invention, these and other objects, and/or advantages that will be apparent from the following description of embodiments, are achieved, in full or at least in part, by an electronic gauge for use with a compressed gas cylinder. The electronic gauge comprises a display interface, a pressure sensor having a pressure sensing element and an amplification circuit for amplifying a signal from the pressure sensing element, a temperature sensor, and a control electronics board connected to the display interface, the pressure sensing element and the temperature sensor. The amplification circuit is integrally formed with the control electronics board.

This is advantageous in that this type of combination design will integrate separate elements of the electronic gauge resulting in lower cost solution. An electronic gauge basically consists of the following elements: a pressure transmitter, a control electronics board, a display, a battery and a case. The control electronics and display are contained in a case, often including the battery. The pressure transmitter is connected to case using a cable and connector. The new electronic gauge design integrates the pressure transmitter into the case. To achieve this the pressure transmitter is first separated into its sensing element and its amplification circuit. Thereafter, the amplification circuit is integrated onto the control electronics board. This enables the whole system to be integrated into the case design such that it is one complete unit. In doing so costs are significantly reduced regarding the pressure transmitter through removal of electronics, removal of cables and connectors, and a reduction in housing design.

The pressure sensing element of the pressure sensor and a temperature sensing element of the temperature sensor may be adjacently arranged so as to measure pressure and temperature at the same location.

The electronic gauge may further comprise a memory connected to the control electronics board.

The electronic gauge may further comprise a casing which houses all components of the electronic gauge.

The casing may further house a battery providing power to the components of the electronic gauge.

According to a second aspect of the invention as defined in claim 6, these and other objects are achieved, in full or at least in part, by a method of monitoring that a residual pressure valve of a gas cylinder is operational, by using the electronic gauge according any one of the claims 1 to 5.

The method comprises detecting at least one pressure value in the gas cylinder, detecting at least one temperature value in the gas cylinder, detecting an open flowrate position of the residual pressure valve, calculating an activation pressure of the residual pressure valve based on the at least one temperature value, comparing the at least one pressure value in the gas cylinder with the calculated activation pressure of the residual pressure valve, and indicating to a user that the residual pressure valve is operational if the detected at least one pressure value is above the calculated activation pressure for a specific time period, and/or indicating to the user that the residual pressure valve is not operational if the detected at least one pressure value is below the calculated activation pressure for a specific time period.

This is advantageous in that the method is able to accurately measure the pressure and temperature in the cylinder and identify if the residual pressure valve has operated and if it has operated successfully. This is achieved by monitoring the flowrate position (i.e. open so gas should flow) and the pressure of the cylinder. If, at the activation pressure of the residual pressure valve, the pressure remains stable then the residual pressure valve is working. If the valve is open and the pressure continues to decrease below the activation pressure at a rate greater than temperature effects (i.e. cooling), then it can be identified that the residual pressure valve is not working. This can then be displayed and wirelessly transmitted so that the gas re-filler knows the valve requires repair or maintenance. If, in any state the pressure is measured to be below the activation pressure of the residual pressure valve, it can be identified, displayed and wirelessly transmitted so that the gas re-filler knows the valve requires repair or maintenance. Further, the historical functioning of the residual pressure valve can be monitored in terms of how many times it has been activated and at what pressure it did activate. With this information predictive maintenance of the residual pressure can be conducted.

The at least one pressure value and the at least one temperature value may be detected at the same location.

The steps of the method may be repeated continuously such that a constant indication of the status of the residual pressure valve can be provided.

The method may further comprise storing any information relating to the residual pressure valve on a memory. Further the historical functioning of the residual pressure valve can be monitored in terms of how many times it has been activated and at what pressure it did activate. With this information predictive maintenance of the residual pressure can be conducted.

The method may further comprise presenting the indication of the status of the residual pressure valve on a display interface and/or wirelessly transmitting the indication of the status of the residual pressure valve to a further unit.

The method may further comprise the calculation of the time remaining until substantially all gas in a compressed gas cylinder has been depleted. The method may calculate a time remaining until substantially all gas in a compressed gas cylinder has been depleted based on the at least one pressure value, the at least one temperature value, and a volume of the gas cylinder. The at least one pressure value and the at least one temperature value are detected at the same location. $

As stated above, the problem with currently available methods for calculating the time remaining is especially that they have inaccuracies as the temperature of the gas is not accounted for. This is a known and recognised problem that attempts have been made to be solved by using temperature measurement at the electronics board. This unfortunately often does not accurately reflect the real temperature of the gas, for example during filling when adiabatic compression occurs. This aspect of the invention may provide a method for an accurate measure of pressure and temperature along with an accurate sensing of the flow selector position. This is achieved by detecting the pressure and temperature at the same time and location.

The method may further comprise displaying the time remaining until substantially all gas in the gas cylinder has been depleted on a display interface.

The method may further comprise storing the detected values which in connection with a learning algorithm is used to enhance the accuracy in calculating the time remaining until substantially all gas in a compressed gas cylinder has been depleted.

The method may further comprise triggering an alarm if the calculated time remaining until substantially all gas in a compressed gas cylinder has been depleted is below a predetermined time value.

The method may further comprise wirelessly sending a signal to a further unit upon triggering of the alarm.

Effects and features of the second aspect of the present invention are largely analogous to those described above in connection with the first aspect of the inventive concept. Embodiments mentioned in relation to the first aspect of the present invention are largely compatible with the further aspects of the invention.

Other objectives, features and advantages of the present invention will appear from the following detailed disclosure, from the attached claims, as well as from the drawings. It is noted that the invention relates to all possible combinations of features.

Generally, all terms used in the claims are to be interpreted according to their ordinary meaning in the technical field, unless explicitly defined otherwise herein. All references to "a/an/the [element, device, component, means, step, etc.]" are to be interpreted openly as referring to at least one instance of the element, device, component, means, step, etc., unless explicitly stated otherwise.

As used herein, the term "comprising" and variations of that term are not intended to exclude other additives, components, integers or steps.

### Brief description of the drawings

The above, as well as additional objects, features and advantages of the present invention, will be better understood through the following illustrative and non-limiting detailed description of embodiments of the present invention, with reference to the appended drawings, where the same reference numerals may be used for similar elements, and wherein:
Fig. 1A and 1B are perspective views of an exemplary embodiment of an electronic gauge according to first aspect of the invention.
Fig. 2A to 2B are perspective views of an exemplary embodiment of a gas cylinder equipped with the electronic gauge in Fig. 1A and 1B.
Fig. 3 is a perspective view of a system including the electronic gauge in Fig. 1A and 1B.

### Detailed description of preferred embodiments of the invention

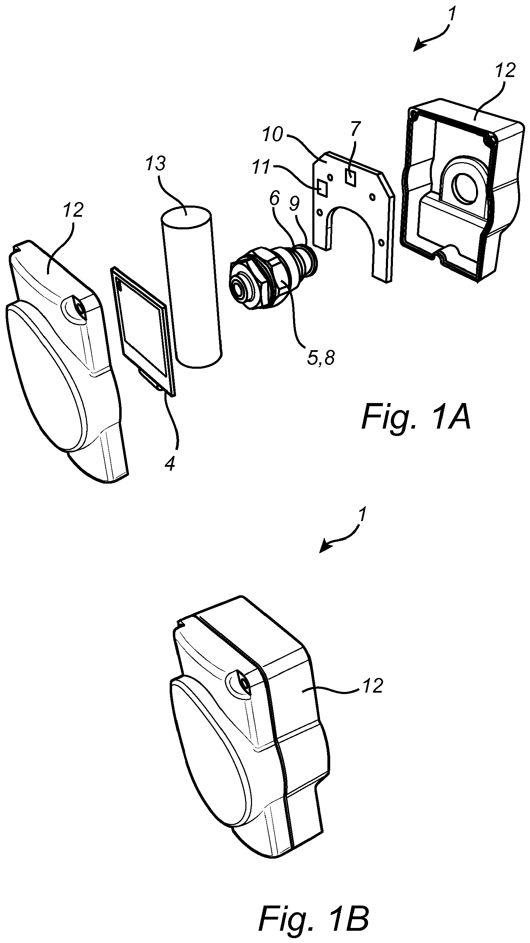

Fig. 1A and 1B illustrate an exemplary embodiment of an electronic gauge 1 for use with a compressed gas cylinder 2. The electronic gauge 1 comprises a display interface 4, a pressure sensor 5 which divided into a pressure sensing element 6 and an amplification circuit 7 for amplifying a signal from the pressure sensing element 6, and a temperature sensor 8. The pressure sensing element 6 of the pressure sensor 7 and a temperature sensing element 9 of the temperature sensor 8 are adjacently arranged so as to be able to measure pressure and temperature at the same location in the gas cylinder 2.

The electronic gauge 1 further comprises a control electronics board 10 which is connected to the display interface 4, the pressure sensing element 6 and the temperature sensor 8. The amplification circuit 7 is integrally formed with the control electronics board 10 in order to be able to make a more compact overall electronic gauge 1. In this specific embodiment, the electronic gauge 1 is further equipped with a memory 11 which also is connected to the control electronics board 10.

Here, an outer casing 12 is provided which houses all components of the electronic gauge 1. The outer casing 12 comprises a battery 13 which provides power to the components of the electronic gauge 1.

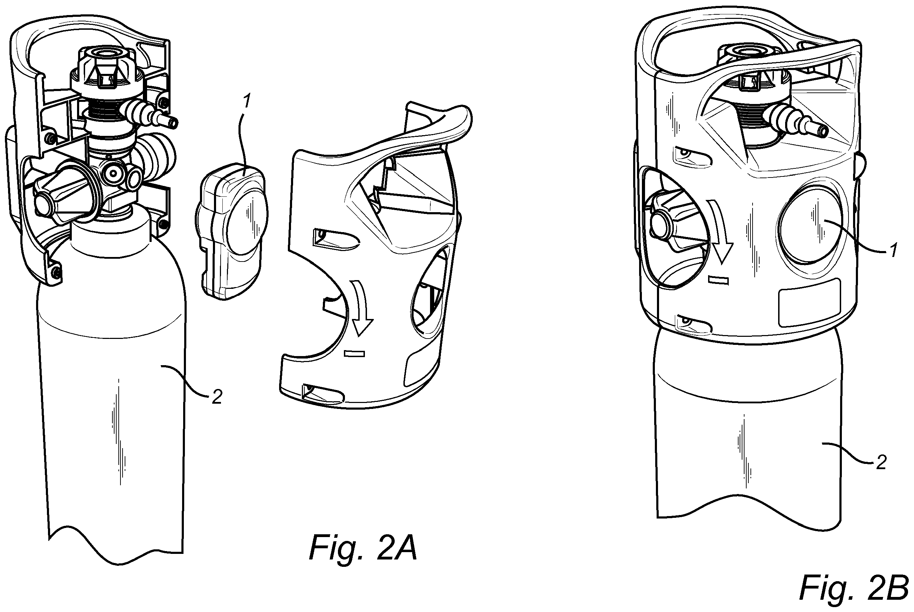

Fig. 2A and 2B illustrate the gas cylinder 2 equipped with the electronic gauge 1 of the present invention.

The new and inventive electronic gauge 1 is useful in a number of different ways, both for a user of the gas cylinder 2 as well as for a patient caretaker.

According to one exemplary method, the electronic gauge 1 is used to calculate the time remaining until substantially all gas in the gas cylinder 2 has been depleted.

The method comprises detecting an open flowrate position of the gas cylinder 2, detecting at least one pressure value in the gas cylinder 2, detecting at least one temperature value in the gas cylinder 2, and calculating a time remaining until substantially all gas in a compressed gas cylinder 2 has been depleted based on the at least one pressure value, the at least one temperature value, and a volume of the gas cylinder. The at least one pressure value and the at least one temperature value are detected at the same location in the gas cylinder 2.

In one preferred embodiment, the method further comprises storing the detected values which in connection with a learning algorithm is used to enhance the accuracy in calculating the time remaining until substantially all gas in a compressed gas cylinder 2 has been depleted.

The method could also include displaying the time remaining until substantially all gas in the gas cylinder 2 has been depleted on a display interface, and triggering an alarm if the calculated time remaining until substantially all gas in a compressed gas cylinder 2 has been depleted is below a predetermined time value. Preferably, a signal to a display unit 14 is sent wirelessly upon triggering of the alarm.

According to another exemplary method, the electronic gauge 1 is used to monitor that a residual pressure valve (not shown) of the gas cylinder 2 is operational.

The method comprises detecting at least one pressure value in the gas cylinder 2, detecting at least one temperature value in the gas cylinder 2, detecting an open flowrate position of the residual pressure valve, calculating an activation pressure of the residual pressure valve based on the at least one temperature value, comparing the at least one pressure value in the gas cylinder 2 with the calculated activation pressure of the residual pressure valve, and indicating to a user that the residual pressure valve is operational if the detected at least one pressure value is above the calculated activation pressure for a specific time period, and/or indicating to the user that the residual pressure valve is not operational if the detected at least one pressure value is below the calculated activation pressure for a specific time period.

Preferably, the at least one pressure value and the at least one temperature value are detected at the same location.

Further, in order to be able to provide a continuous monitoring of the status of the residual pressure valve, the steps of the method are repeated continuously such that a constant indication of the status of the residual pressure valve can be provided.

The method could also comprise storing any information relating to the residual pressure valve on the memory 11, and comprising presenting the indication of the status of the residual pressure valve on a display interface and/or wirelessly transmitting the indication of the status of the residual pressure valve to a further unit 14.

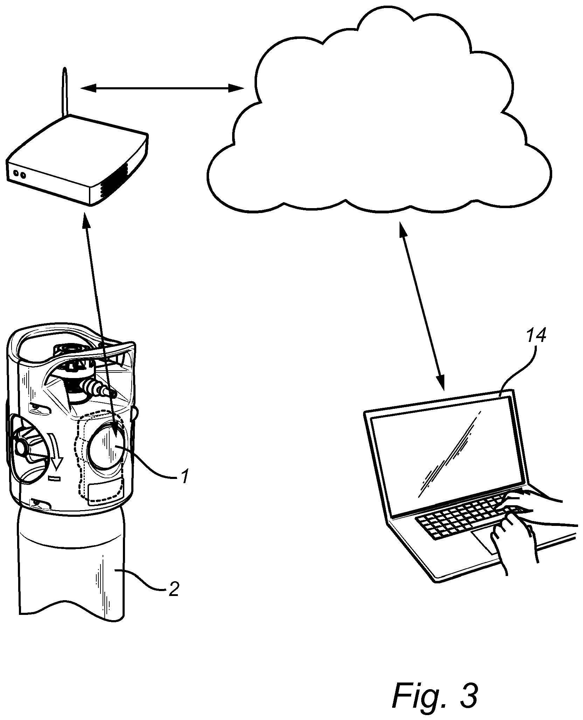

Fig. 3 illustrates a system in which the gas cylinder 2 equipped with the electronic gauge 1 is wirelessly connected to the display unit 14 via a cloud. The signal from the electronic gauge 1 goes through a hub using Bluetooth which in turn transmits the data. An oxygen concentrator may be used as the hub, or it be constituted by a stand-alone hub in order to thereafter link to the cloud or any other data transmission.

It is understood that other variations in the present invention are contemplated and in some instances, some features of the invention can be employed without a corresponding use of other features. Accordingly, it is appropriate that the appended claims be construed broadly in a manner consistent with the scope of the invention.

Naturally, the number, size and shape of the components of the electronic gauge 1 may be variated in any suitable way without departing from the scope of the invention.

The control electronics board 10 may be programmed to initiate different types of alarms in order to make the gas cylinder 2 more user-friendly and to enhance safety related to the use of the same. The control electronics board 10 may for example be programmed to initiate an alarm if the pressure sensor 5 or the temperature sensor 8 detect values outside of a predetermined range. Another example could be an alarm for no flow, i.e. if the flow knob is set to give a flow but the shutoff valve is off, an alarm should be initiated after about 30 seconds once the electronic gauge 1 has established that there is no pressure drop.

## Claims

1. An electronic gauge (1) for use with a compressed gas cylinder (2), comprising:
a display interface (4),
a pressure sensor (5) having a pressure sensing element (6) and an amplification circuit (7) for amplifying a signal from the pressure sensing element (6),
a temperature sensor (8), and
a control electronics board (10) connected to the display interface (4), the pressure sensing element (6) and the temperature sensor (8),
**characterized in that**
the amplification circuit (7) is integrally formed with the control electronics board (10).

2. The electronic gauge (1) according to claim 1, wherein the pressure sensing element (6) of the pressure sensor (5) and a temperature sensing element (9) of the temperature sensor (8) are adjacently arranged so as to measure pressure and temperature at the same location.

3. The electronic gauge (1) according to claim 1 or 2, further comprising a memory (11) connected to the control electronics board (10).

4. The electronic gauge (1) according to any one of the preceding claims, further comprising a casing (12) which houses all components of the electronic gauge (1).

5. The electronic gauge (1) according to claim 4, wherein the casing (12) further houses a battery (13) providing power to the components of the electronic gauge (1).

6. A method of monitoring that a residual pressure valve of a gas cylinder (2) is operational, by using the electronic gauge according to any one of the claims 1 to 5, the method comprising:
detecting at least one pressure value in the gas cylinder (2),
detecting at least one temperature value in the gas cylinder (2),
detecting an open flowrate position of the residual pressure valve,
calculating an activation pressure of the residual pressure valve based on the at least one temperature value,
comparing the at least one pressure value in the gas cylinder (2) with the calculated activation pressure of the residual pressure valve, and
indicating to a user that the residual pressure valve is operational if the detected at least one pressure value is above the calculated activation pressure for a specific time period, and/or
indicating to the user that the residual pressure valve is not operational if the detected at least one pressure value is below the calculated activation pressure for a specific time period.

7. The method according to claim 6, wherein the at least one pressure value and the at least one temperature value are detected at the same location.

8. The method according to claim 6 or 7, wherein the steps of the method are repeated continuously such that a constant indication of the status of the residual pressure valve can be provided.

9. The method according to claim 6 to 8, further comprising storing any information relating to the residual pressure valve on a memory (11).

10. The method according to any one of claims 6 to 9, further comprising presenting the indication of the status of the residual pressure valve on a display interface (4) and/or wirelessly transmitting the indication of the status of the residual pressure valve to a further unit (14).

11. The method according to claim 6, further comprising the steps of:
calculating a time remaining until substantially all gas in a compressed gas cylinder (2) has been depleted based on the at least one pressure value, the at least one temperature value, and a volume of the gas cylinder (2),
wherein the at least one pressure value and the at least one temperature value are detected at the same location.

12. The method according to claim 11, further comprising displaying the time remaining until substantially all gas in the gas cylinder (2) has been depleted on a display interface (4).

13. The method according to claim 11 or 12, further comprising storing the detected values which in connection with a learning algorithm is used to enhance the accuracy in calculating the time remaining until substantially all gas in a compressed gas cylinder (2) has been depleted.

14. The method according to any one of the claims 11 to 13, further comprising triggering an alarm if the calculated time remaining until substantially all gas in a compressed gas cylinder (2) has been depleted is below a predetermined time value.

15. The method according to claim 14, further comprising wirelessly sending a signal to a further unit upon triggering of the alarm.

## Patentansprüche

1. Elektronisches Messgerät (1) zur Verwendung mit einem Druckgaszylinder (2), umfassend:
eine Anzeigeschnittstelle (4),
einen Drucksensor (5), der ein Druckerfassungselement (6) und eine Verstärkungsschaltung (7) zum Verstärken eines Signals von dem Druckerfassungselement (6) aufweist,
einen Temperatursensor (8), und
eine Steuerelektronikplatine (10), die mit der Anzeigeschnittstelle (4), dem Druckerfassungselement (6) und dem Temperatursensor (8) verbunden ist,
**dadurch gekennzeichnet, dass**
die Verstärkungsschaltung (7) integral mit der Steuerelektronikplatine (10) ausgebildet ist.

2. Elektronisches Messgerät (1) nach Anspruch 1, wobei das Druckerfassungselement (6) des Drucksensors (5) und ein Temperaturerfassungselement (9) des Temperatursensors (8) benachbart angeordnet sind, um Druck und Temperatur am selben Ort zu messen.

3. Elektronisches Messgerät (1) nach Anspruch 1 oder 2, ferner umfassend einen Speicher (11), der mit der Steuerelektronikplatine (10) verbunden ist.

4. Elektronisches Messgerät (1) nach einem der vorhergehenden Ansprüche, ferner umfassend ein Gehäuse (12), das alle Komponenten des elektronischen Messgeräts (1) beherbergt.

5. Elektronisches Messgerät (1) nach Anspruch 4, wobei das Gehäuse (12) ferner eine Batterie (13) beherbergt, die Leistung zu den Komponenten des elektronischen Messgeräts (1) bereitstellt.

6. Verfahren zum Überwachen, dass ein Restdruckventil eines Gaszylinders (2) betriebsbereit ist, durch Verwenden des elektronischen Messgeräts nach einem der Ansprüche 1 bis 5, wobei das Verfahren Folgendes umfasst:
Detektieren mindestens eines Druckwerts in dem Gaszylinder (2),
Detektieren mindestens eines Temperaturwerts in dem Gaszylinder (2),
Detektieren einer geöffneten Durchflussratenstellung des Restdruckventils,
Berechnen eines Aktivierungsdrucks des Restdruckventils basierend auf dem mindestens einen Temperaturwert,
Vergleichen des mindestens einen Druckwerts in dem Gaszylinder (2) mit dem berechneten Aktivierungsdruck des Restdruckventils, und
Angeben, einem Benutzer, dass das Restdruckventil betriebsbereit ist, wenn der detektierte mindestens eine Druckwert für eine festgelegte Zeitdauer über dem berechneten Aktivierungsdruck liegt, und/oder
Angeben, dem Benutzer, dass das Restdruckventil nicht betriebsbereit ist, wenn der detektierte mindestens eine Druckwert für eine festgelegte Zeitdauer unterhalb des berechneten Aktivierungsdrucks liegt.

7. Verfahren nach Anspruch 6, wobei der mindestens eine Druckwert und der mindestens eine Temperaturwert am selben Ort detektiert werden.

8. Verfahren nach Anspruch 6 oder 7, wobei die Schritte des Verfahrens kontinuierlich wiederholt werden, so dass eine konstante Angabe des Status des Restdruckventils bereitgestellt werden kann.

9. Verfahren nach Anspruch 6 bis 8, ferner umfassend Speichern von Informationen in Bezug auf das Restdruckventil auf einem Speicher (11).

10. Verfahren nach einem der Ansprüche 6 bis 9, ferner umfassend Darstellen der Angabe des Status des Restdruckventils auf einer Anzeigeschnittstelle (4) und/oder drahtloses Übertragen der Angabe des Status des Restdruckventils an eine weitere Einheit (14).

11. Verfahren nach Anspruch 6, ferner umfassend die folgenden Schritte:
Berechnen einer verbleibenden Zeit, bis im Wesentlichen das gesamte Gas in einem Druckgaszylinder (2) verbraucht wurde, basierend auf dem mindestens einen Druckwert, dem mindestens einen Temperaturwert und einem Volumen des Gaszylinders (2),
wobei der mindestens eine Druckwert und der mindestens eine Temperaturwert am selben Ort detektiert werden.

12. Verfahren nach Anspruch 11, ferner umfassend Anzeigen der verbleibenden Zeit, bis im Wesentlichen das gesamte Gas in dem Gaszylinder (2) verbraucht wurde, auf einer Anzeigeschnittstelle (4).

13. Verfahren nach Anspruch 11 oder 12, ferner umfassend Speichern der detektierten Werte, die in Verbindung mit einem Lernalgorithmus verwendet werden, um die Genauigkeit bei Berechnen der verbleibenden Zeit, bis im Wesentlichen das gesamte Gas in einem Druckgaszylinder (2) verbraucht wurde, zu verbessern.

14. Verfahren nach einem der Ansprüche 11 bis 13, ferner umfassend Auslösen eines Alarms, wenn die berechnete verbleibende Zeit, bis im Wesentlichen das gesamte Gas in einem Druckgaszylinder (2) verbraucht wurde, unterhalb eines vorbestimmten Zeitwerts liegt.

15. Verfahren nach Anspruch 14, ferner umfassend drahtloses Senden eines Signals an eine weitere Einheit bei Auslösen des Alarms.

## Revendications

1. Jauge électronique (1) pour une utilisation avec un cylindre à gaz comprimé (2), comprenant :
une interface d'affichage (4),
un capteur de pression (5) ayant un élément de capteur de pression (6) et un circuit d'amplification (7) pour amplifier un signal provenant de l'élément capteur de pression (6),
un capteur de température (8), et
une carte électronique de commande (10) connectée à l'interface d'affichage (4), à l'élément de capteur de pression (6) et au capteur de température (8),
**caractérisée en ce que**
le circuit d'amplification (7) est formé d'un seul tenant avec la carte électronique de commande (10).

2. Jauge électronique (1) selon la revendication 1, dans laquelle l'élément de détection de pression (6) du capteur de pression (5) et un élément capteur de température (9) du capteur de température (8) sont agencés de façon adjacente de sorte à mesurer la pression et la température au niveau du même emplacement.

3. Jauge électronique (1) selon la revendication 1 ou la revendication 2, comprenant en outre une mémoire (11) connectée à la carte électronique de commande (10) .

4. Jauge électronique (1) selon l'une quelconque des revendications précédentes, comprenant en outre un boîtier (12) qui loge tous les composants de la jauge électronique (1).

5. Jauge électronique (1) selon la revendication 4, dans laquelle le boîtier (12) loge en outre une batterie (13) fournissant de l'énergie aux composants de la jauge électronique (1).

6. Procédé pour contrôler qu'une soupape de pression résiduelle d'un cylindre à gaz (2) est opérationnelle, en utilisant la jauge électronique selon l'une quelconque des revendications 1 à 5, le procédé comprenant :
la détection d'au moins une valeur de pression dans le cylindre à gaz (2),
la détection d'au moins une valeur de température dans le cylindre à gaz (2),
la détection d'une position de débit ouvert de la soupape de pression résiduelle,
le calcul d'une pression d'activation de la soupape de pression résiduelle sur la base de l'au moins une valeur de température,
la comparaison de l'au moins une valeur de pression dans le cylindre à gaz (2) avec la pression d'activation calculée de la soupape de pression résiduelle, et
l'indication à un utilisateur que la soupape de pression résiduelle est opérationnelle si l'au moins une valeur de pression détectée est supérieure à la pression d'activation calculée pendant une période de temps spécifique, et/ou
l'indication à l'utilisateur que la soupape de pression résiduelle n'est pas opérationnelle si l'au moins une valeur de pression détectée est inférieure à la pression d'activation calculée pendant une période de temps spécifique.

7. Procédé selon la revendication 6, dans lequel l'au moins une valeur de pression et l'au moins une valeur de température sont détectées au niveau du même emplacement.

8. Procédé selon la revendication 6 ou la revendication 7, dans lequel les étapes du procédé sont répétées en continu de telle sorte qu'une indication constante de l'état de la soupape de pression résiduelle puisse être fournie.

9. Procédé selon la revendication 6 à 8, comprenant en outre le stockage de toute information relative à la soupape de pression résiduelle sur une mémoire (11).

10. Procédé selon l'une quelconque des revendications 6 à 9, comprenant en outre la présentation de l'indication de l'état de la soupape de pression résiduelle sur une interface d'affichage (4) et/ou la transmission sans fil de l'indication de l'état de la soupape de pression résiduelle à une autre unité (14).

11. Procédé selon la revendication 6, comprenant en outre les étapes consistant à :
calculer un temps restant jusqu'à ce que substantiellement tout le gaz dans un cylindre à gaz comprimé (2) ait été appauvri sur la base de l'au moins une valeur de pression, de l'au moins une valeur de température, et d'un volume du cylindre à gaz (2),
dans lequel l'au moins une valeur de pression et l'au moins une valeur de température sont détectées au niveau du même emplacement.

12. +Procédé selon la revendication 11, comprenant en outre l'affichage du temps restant jusqu'à ce que substantiellement tout le gaz dans le cylindre à gaz (2) ait été appauvri sur une interface d'affichage (4).

13. Procédé selon la revendication 11 ou la revendication 12, comprenant en outre le stockage des valeurs détectées qui, en connexion avec un algorithme d'apprentissage, sont utilisées pour améliorer la précision dans le calcul du temps restant jusqu'à ce que substantiellement tout le gaz dans un cylindre à gaz comprimé (2) ait été épuisé.

14. Procédé selon l'une quelconque des revendications 11 à 13, comprenant en outre le déclenchement d'une alarme si le temps calculé restant jusqu'à ce que substantiellement tout le gaz dans un cylindre à gaz comprimé (2) ait été épuisé est en dessous d'une valeur de temps prédéterminée.

15. Procédé selon la revendication 14, comprenant en outre l'envoi sans fil d'un signal à une autre unité lors du déclenchement de l'alarme.
